# EUROPEAN PATENT SPECIFICATION

(11) **EP 2 477 509 B1**
(45) Date of publication and mention of the grant of the patent: **30.07.2014**
(21) Application number: 10759841.9
(22) Date of filing: 15.09.2010
(51) Int. Cl.: A23L 1/226, A23L 1/236, A23L 1/22

(54) **ORGANIC COMPOUNDS**
ORGANISCHE VERBINDUNGEN
COMPOSÉS ORGANIQUES

(30) Priority: 15.09.2009 GB 0916178
(43) Date of publication of application: 25.07.2012
(73) Proprietor: Givaudan SA, 1214 Vernier (CH)
(72) Inventor: FLAMME, Eric, Cincinnati, Ohio 45226 (US); UNGUREANU, Ioana, Maria, Cincinnati, Ohio 45215 (US); KOHLEN, Eric, NL-3831 PW Leusden (NL)
(74) Representative: Simmons, John Murray
(86) International application number: PCT/EP2010/063523
(87) International publication number: WO 2011/032967

(56) References cited:
- GB-A- 1 423 700

## Description

The present invention is concerned with para-alkoxy benzonitrile compounds and their use as sweetness enhancers. The present invention is also concerned with consumable products containing a para-alkoxy benzonitrile compound.

A relationship between sweet taste and the substituent pattern on phenylcyano systems has been described by Tsuzuki et al in the J. of chemical and engineering data (1971), 16(1), 108-11. In particular, the methoxy and ethoxy benzonitrile compounds were described as sweet or sweetish.

Whereas certain alkoxy benzonitriles are described in the literature as having the character of being sweet, applicant is not aware that these materials have been employed in the food industry in any capacity and certainly not as sweetness-enhancers.

The flavour industry seeks new sweetness-enhancing compounds. Sugars are commonly employed as sweeteners in consumable products and the use of sweetness enhancers to reduce the reliance on sugars is highly desirable at least on dietary and health grounds.

Applicant has found that certain para-alkoxy benzonitrile compounds possess sweetness-enhancing properties.

In a first aspect there is provided the use of para-alkoxy benzonitriles as sweetness enhancers in consumable products containing at least one sweetener.

Particular para-alkoxy benzonitriles may be selected from the group consisting of p-ethoxy benzonitrile, p-propoxy benzonitrile, 4-sec-butoxybenzonitrile, and 4-isopropoxybenzonitrile.

The para-alkoxy benzonitrile compounds of the present invention are sweetness enhancers as determined by panellists in taste tests. Sweetness enhancement can be assessed by panellists according to techniques known in the art. Methods of measuring sweetness enhancement are described herein below in the examples. When a sweetness enhancer does not possess sweet properties or it is not perceived as sweet because it is used below its sweetness threshold then enhancement can be assessed in a simple test whereby the tastes of sweetened consumable products with and without the added putative sweetness enhancer are compared. If a sweetness enhancer is employed in concentrations above its sweetness threshold, then one first has to determine that enhancer's sweetness iso-intensity with standard sweetener solutions of varied concentrations. Thereafter one can determine by comparative tests whether the putative enhancer's sweetness effect is additive (no enhancement) or synergistic (sweetness enhancing). Methods of determining synergism in sweetness enhancement are described herein below in the examples.

The para-alkoxy benzonitrile compounds may be used in consumable products in widely varying amounts depending on the type of consumable product, the sweetener or sweeteners employed, and the concentration thereof, and the particular taste-effect to be achieved. Typical amounts would be 0.1 to 20 ppm based on the total weight of the consumable product, more particularly 0.5 to 5 ppm.

It might be desirable to employ the para-alkoxy benzonitriles at levels below their sweetness detection thresholds (insofar as the compounds exhibit sweetness).The sweetness detection threshold varies somewhat in different individuals. For example, some individuals are able to detect the sweetness of sucrose in a very low concentration of 0.4%, others need at least 0.7% or even more. Generally, trained sweet-sensitive panelists are able to detect at least 0.5% sucrose and for the purpose of this invention the detection threshold level of a sweetness enhancer is an amount in ppm that is iso-intense with a 0.5% or less sucrose solution.

The para-alkoxy benzonitrile compounds described herein may be combined with other known sweetness enhancers, for example mogroside V, swingle extract, rubusoside, rubus extract, stevioside, rebaudioside A, and neohesperidin dihydrochalcone. The other known sweetness enhancers may be employed in consumable products in widely varying amounts depending on the nature of consumable product, the sweetener or sweeteners employed, and the concentration thereof, and the particular taste-effect to be achieved. Typical amounts would be 0.1 to 20 ppm based on the total weight of the consumable product, more particularly 0.5 to 5 ppm.

The at least one sweetener contained in said consumable product may be selected from any of the natural and artificial sweeteners known in the art. Representative examples include the sugars sucrose, fructose, glucose, high fructose corn syrup (containing fructose and glucose), xylose, arabinose, and rhamnose, the sugar alcohols erythritol, xylitol, mannitol, sorbitol, and inositol, and the artificial sweeteners AceK, aspartame, neotame, sucralose, and saccharine, to enhance the sweetness of said sweeteners.

Sucrose, also known as table sugar or saccharose, is a disaccharide of glucose and fructose. Its systematic name is α-D-glucopyranosyl-(1→2)-β-D-fructofuranose.

Fructose and glucose are monosaccharide sugars.

High fructose corn syrup (HFCS) consists of a mixture of glucose and fructose. Like ordinary corn syrup, the high fructose variety is made from corn starch using enzymes. The fructose content of corn syrup (glucose) is increased through enzymatic processing. Common commercial grades of high fructose corn syrup include fructose contents of 42%, 55%, or 90%. The 55% grade is most commonly used in soft drinks.
Erythritol (systematic name 1,2,3,4-butanetetrol) is a natural non-caloric sugar alcohol.

AceK, aspartame, neotame and and sucralose are artificial sweeteners.

Acesulfam potassium (AceK) is the potassium salt of 6-methyl-1,2,3- oxathiazine-4(3H)-one 2,2-dioxide, an N-sulfonylamide. It is also known as Acesulfam K or AceK, or under various trademark names including Sunett® and Sweet One®. In the European Union it is also known under the E number (additive code) E950.

Aspartame is the name for aspartyl-phenylalanine-1-methyl ester, a dipeptide. It is known under various trademark names including Equal®, and Canderel®. In the European Union, it is also known under the E number (additive code) E951.

Sucralose is the name for 6-dichloro-1,6-dideoxy-β-D-fructo-furanosyl 4-chloro-4-deoxy-α-D-galactopyranoside, which is a chlorodeoxysugar. It is also known by the trade name Splenda®. In the European Union, it is also known under the E number (additive code) E955.

The natural sweeteners may be used in pure or partly purified form, and may be chemically synthesised, produced by biotechnological processes including fermentation, or isolated from a natural source, in particular a botanical source (including, without limitation, fruits, sugar cane, sugar beet), for example a plant extract or syrup including, without limitation, corn syrup, high fructose corn syrup, honey, molasses, maple syrup, fruit concentrates, and other syrups and extracts.

Consumable products may contain any amount of a sweetener as herein-described, a useful range is, for example, at least 2%, for example about 2% to 15%, or about 5% to 12% of one or more of said sweeteners.

The sweetness enhancers can be added to consumable products to enhance the sweetness of sweeteners employed in said consumable products.

The term "consumable product(s)" refers to any solid or liquid composition that is consumed for at least one of nourishment and pleasure, or that is placed in the mouth to achieve an effect before being discarded. A broad general list includes, but is not limited to, foodstuffs of all kinds, confectionery, baked goods, sweet goods, dairy products and beverages.

The term "confectionery" includes, but is not limited to:
chewing gum (which includes sugarized gum, sugar-free gum, functional gum and bubble gum), centerfill confections, chocolate and other chocolate confectionery, medicated confectionery, lozenges, tablets, pastilles, mints, standard mints, power mints, chewy candies, hard candies, boiled candies, breath and other oral care films or strips, candy canes, lollipops, gummies, jellies, fudge, caramel, hard and soft panned goods, toffee, taffy, liquorice, gelatin candies, gum drops, jelly beans, nougats, fondants, or combinations of one or more of these, or edible compositions incorporating one or more of these.

The term "baked goods" includes, but is not limited to:
alfajores, bread, packaged/industrial bread, unpackaged/artisanal bread, pastries, cakes, packaged/industrial cakes, unpackaged/artisanal cakes, cookies, chocolate coated biscuits, sandwich biscuits, filled biscuits, savory biscuits and crackers, bread substitutes,

The term "sweet goods" includes, but is not limited to:
breakfast cereals, ready-to-eat ("rte") cereals, family breakfast cereals, flakes, muesli, other rte cereals, children's breakfast cereals, hot cereals,

The term "dairy products" includes, but is not limited to:
ice cream, impulse ice cream, single portion dairy ice cream, single portion water ice cream, multi-pack dairy ice cream, multi-pack water ice cream, take-home ice cream, take-home dairy ice cream, ice cream desserts, bulk ice cream, take-home water ice cream, frozen yoghurt, artisanal ice cream, dairy products, milk, fresh/pasteurized milk, full fat fresh/pasteurized milk, semi skimmed fresh/pasteurized milk, long-life/uht milk, full fat long life/uht milk, semi skimmed long life/uht milk, fat-free long life/uht milk, goat milk, condensed/evaporated milk, plain condensed/evaporated milk, flavored, functional and other condensed milk, flavored milk drinks, dairy only flavored milk drinks, flavored milk drinks with fruit juice, soy milk, sour milk drinks, fermented dairy drinks, coffee whiteners, powder milk, flavored powder milk drinks, cream, yoghurt, plain/natural yoghurt, flavored yoghurt, fruited yoghurt, probiotic yoghurt, drinking yoghurt, regular drinking yoghurt, probiotic drinking yoghurt, chilled and shelf-stable desserts, dairy-based desserts, soy-based desserts,

Other foodstuff includes, but is not limited to:
chilled snacks, sweet and savory snacks, fruit snacks, chips/crisps, extruded snacks, tortilla/corn chips, popcorn, pretzels, nuts, other sweet and savory snacks, snack bars, granola bars, breakfast bars, energy bars, fruit bars, other snack bars, meal replacement products, slimming products, convalescence drinks, ready meals, canned ready meals, frozen ready meals, dried ready meals, chilled ready meals, dinner mixes, frozen pizza, chilled pizza, soup, canned soup, dehydrated soup, instant soup, chilled soup, uht soup, frozen soup, pasta, canned pasta, dried pasta, chilled/fresh pasta, noodles, plain noodles, instant noodles, cups/bowl instant noodles, pouch instant noodles, chilled noodles, snack noodles, dried food, dessert mixes, sauces, dressings and condiments, herbs and spices, spreads, jams and preserves, honey, chocolate spreads, nut-based spreads, and yeast-based spreads.

The term "beverage" as used herein means any drinkable liquid or semi-liquid, including for example:
flavored water, soft drinks, fruit drinks, coffee-based drinks, tea-based drinks, juice-based drinks (includes fruit and vegetable), milk-based drinks, gel drinks, carbonated or non-carbonated drinks, powdered drinks, alcoholic or non-alcoholic drinks.

In the preparation of the abovementioned products, there may be used all or any of the standard ingredients found in such products, used in art-recognised quantities. Examples of such ingredients include (but are by no means limited to) solvents and co-solvents; surfactants and emulsifiers; viscosity and rheology modifiers; thickening and gelling agents; preservative materials; pigments, dyestuffs and colouring matters; extenders, fillers and reinforcing agents; stabilisers against the detrimental effects of heat and light, bulking agents, flavoring and flavor-enhancing agents, warming agents, breath fresheners, mouth moisteners, coloring agents, acidulants, buffering agents, antioxidants.

Suitable bulking agents may include mineral adjuvants, which may serve as fillers and textural agents. Suitable mineral adjuvants include calcium carbonate, magnesium carbonate, alumina, aluminum hydroxide, aluminum silicate, talc, tricalcium phosphate, tricalcium phosphate and the like, which can serve as fillers and textural agents.

Additional bulking agents (carriers, extenders) suitable for use include sweetening agents such as monosaccharides, disaccharides, polysaccharides, sugar alcohols, polydextrose, and maltodextrins; minerals, such as calcium carbonate, talc, titanium dioxide, dicalcium phosphate; and combinations thereof

Fillers modify the texture and aid processing. Examples of such fillers include magnesium and aluminum silicates, clay, alumina, talc, titanium oxide, cellulose polymers, and the like.

Specific examples of flavouring agents include, but are not limited to:
natural flavors, artificial flavors, spices, seasonings, and the like. Exemplary flavoring agents include synthetic flavor oils and flavoring aromatics and/or oils, oleoresins, essences, distillates, and extracts derived from plants, leaves, flowers, fruits, and so forth, and a combination comprising at least one of the foregoing.

Exemplary flavor oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil; useful flavoring agents include artificial, natural and synthetic fruit flavors such as vanilla, and citrus oils including lemon, orange, lime, grapefruit, yazu, sudachi, and fruit essences including apple, pear, peach, grape, blueberry, strawberry, raspberry, cherry, plum, prune, raisin, cola, guarana, neroli, pineapple, apricot, banana, melon, apricot, ume, cherry, raspberry, blackberry, tropical fruit, mango, mangosteen, pomegranate, papaya and so forth. Additional exemplary flavors imparted by a flavoring agent include a milk flavor, a butter flavor, a cheese flavor, a cream flavor, and a yogurt flavor; a vanilla flavor; tea or coffee flavors, such as a green tea flavor, an oolong tea flavor, a tea flavor, a cocoa flavor, a chocolate flavor, and a coffee flavor; mint flavors, such as a peppermint flavor, a spearmint flavor, and a Japanese mint flavor; spicy flavors, such as an asafetida flavor, an ajowan flavor, an anise flavor, an angelica flavor, a fennel flavor, an allspice flavor, a cinnamon flavor, a chamomile flavor, a mustard flavor, a cardamom flavor, a caraway flavor, a cumin flavor, a clove flavor, a pepper flavor, a coriander flavor, a sassafras flavor, a savory flavor, a Zanthoxyli Fructus flavor, a perilla flavor, a juniper berry flavor, a ginger flavor, a star anise flavor, a horseradish flavor, a thyme flavor, a tarragon flavor, a dill flavor, a capsicum flavor, a nutmeg flavor, a basil flavor, a marjoram flavor, a rosemary flavor, a bayleaf flavor, and a wasabi (Japanese horseradish) flavor; a nut flavor such as an almond flavor, a hazelnut flavor, a macadamia nut flavor, a peanut flavor, a pecan flavor, a pistachio flavor, and a walnut flavor; alcoholic flavors, such as a wine flavor, a whisky flavor, a brandy flavor, a rum flavor, a gin flavor, and a liqueur flavor; floral flavors; and vegetable flavors, such as an onion flavor, a garlic flavor, a cabbage flavor, a carrot flavor, a celery flavor, mushroom flavor, and a tomato flavor.

In some embodiments, other flavoring agents include aldehydes and esters such as cinnamyl acetate, cinnamaldehyde, citral diethylacetal, dihydrocarvyl acetate, eugenyl 49 formate, p-methylamisol, and so forth can be used. Further examples of aldehyde flavorings include acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C- 12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin), and the like. Generally any flavoring or food additive such as those described in Chemicals Used in Food Processing, publication 1274, pages 63-258, by the National Academy of Sciences, can be used. This publication is incorporated herein by reference.

Some of these additives may serve more than one purpose. For example, a sweetener, e.g., sucrose, sorbitol or other sugar alcohol, or combinations of the foregoing sweeteners, may also function as a bulking agent. A combination comprising at least one of the foregoing additives is often used.

There may additionally be present nutraceuticals and medicaments.

Suitable nutraceuticals may include herbs and botanicals such as aloe, bilberry, bloodroot, calendula, capsicum, chamomile, cat's claw, echinacea, garlic, ginger, ginkgo, goldenseal, various ginseng, green tea, guarana, kava kava, lutein, nettle, passionflower, rosemary, saw palmetto, St. John's wort, thyme, and valerian. Also included are mineral supplements such as calcium, copper, iodine, iron, magnesium, manganese, molybdenum, phosphorous, zinc, and selenium. Other nutraceuticals may include fructooligosaccharides, glucosamine, grapeseed extract, cola extract, guarana, ephedra, inulin, phytosterols, phytochemicals, catechins, epicatechin, epicatechin gallate, epigallocatechin, epigallocatechin gallate, isoflavones, lecithin, lycopene, oligofructose, polyphenols, flavanoids, flavanols, flavonols, and psyllium as well as weight loss agents such as chromium picolinate and phenylpropanolamine. Exemplary vitamins and co-enzymes include water or fat soluble vitamins such as thiamin, riboflavin, nicotinic acid, pyridoxine, pantothenic acid, biotin, folic acid, flavin, choline, inositol and para-aminobenzoic acid, carnitine, vitamin C, vitamin D and its analogs, vitamin A and the carotenoids, retinoic acid, vitamin E, vitamin K, vitamin B6, and vitamin B12. Combinations comprising at least one of the foregoing nutraceuticals may be used.

Suitable medicaments may include oral care agents, throat care agents, allergy relief agents, and general medical care agents. General medical care agents may include antihistamines, decongestants (sympathomimetics), antitussives (cough suppressants), antiinflammatories, homeopathic agents, expectorants, anesthetics, demulcents, analgesics, anticholinergics, throat- soothing agents, antibacterial agents, antiviral agents, antifungal agents, antacids, antinauseants, chemotherapeutics, diuretics, psychotherapeutic agents, cardiovascular agents, various alkaloids, laxatives, appetite suppressants, ACE-inhibitors, anti-asthmatics, anti-cholesterolemics, antidepressants, anti-diarrhea preparations, anti-hypertensives, anti-lipid agents, acne drugs, amino acid preparations, anti-uricemic drugs, anabolic preparations, appetite stimulants, bone metabolism regulators, contraceptives, endometriosis management agents, enzymes, erectile dysfunction therapies such as sildenafil citrate, fertility agents, gastrointestinal agents, homeopathic remedies, hormones, motion sickness treatments, muscle relaxants, osteoporosis preparations, oxytocics, parasympatholytics, parasympathomimetics, prostaglandins, respiratory agents, sedatives, smoking cessation aids such as bromocriptine or nicotine, tremor preparations, urinary tract agents, anti-ulcer agents, anti-emetics, hyper- and hypoglycemic agents, thyroid and anti-thyroid preparations, terine relaxants, erythropoietic drugs, mucolytics, DNA and genetic modifying drugs, and nutritional supplements, including nutraceuticals, micronutrients, vitamins and co-enzymes. The pharmaceutically acceptable salts and prodrugs of the medicaments are also included unless specified otherwise. Some of these medicaments may serve more than one purpose. Combinations of the foregoing types of optional medicaments can be used. Two or more medicaments that have activity against the same or different symptoms can be used together in a combination.

Other suitable and desirable additives are described in standard texts, such as "Handbook of Industrial Chemical Additives", ed. M. and I. Ash, 2nd Ed., (Synapse 2000).

Some of the materials mentioned hereinabove may be present in encapsulated form. By "encapsulated form" is meant that the material is contained within an encapsulating material, which protects and/or retains it and permits its release either gradually or completely. All known methods of encapsulation, may be used, for example, coacervation, spray drying, and absorption into a porous substrate. All possible encapsulation materials may also be used, for example, natural fibres, minerals of large surface area and polymeric materials.

### Example 1

### Determination of sucrose concentration that is iso-intense to aqeous solutions of para-ethoxy benzonitrile (at 10 and 20ppm)

The test samples contained para-ethoxy benzonitrile in water. The control samples were aqueous solutions of sucrose at 0.5%, 1.0%, 1.5% and 2.0%. The sensory evaluations were conducted as follows. All samples were presented at ambient temperature in 15 ml aliquots at random to a panel of 15 subjects all of whom were sweet sensitive of varying sensitivity.

After tasting each sample, panelists rinsed their mouths thoroughly with water at ambient temperature prior to tasting subsequent samples. The tastings were carried out in two replications in one session. Panelists were asked to rank the solutions whilst wearing nose plugs. They were asked to rank from least sweet to most sweet.

The data were subjected to an R-Index analysis. An R-index greater than the critical value, means that the test sample is significantly sweeter than the sucrose sample. An R-index from 50% to the critical value means the sweetness enhancer sample has an equivalent sweetness to the compared sucrose sample. An R-index below the lower critical value indicates that the sucrose sample is sweeter than the sweetness enhancer sample.

| Solutions compared | R-index [%] | Critical value [%] | Significantly different (p<0.05) |
|---|---|---|---|
| 0.5% sucrose vs. 10ppm test sample | 51% | 64.61 | No |
| 0.5% sucrose vs. 20ppm test sample | 81% | 64.61 | Yes |
| 1.0% sucrose vs. 20ppm test sample | 30% | 35.39 | Yes |

The experiment demonstrates that 20ppm p-ethoxy benzonitrile solutions are perceived as being significantly sweeter than 0.5% sucrose but significantly less sweet than a 1% sucrose solution. A 10ppm p-ethoxy benzonitrile solution is perceived as being iso sweet to a 0.5% sucrose solution. By interpolation, a 20ppm p-ethoxy benzonitrile solution was iso-sweet to a 0.75% sucrose solution.

### Example 2

### Comparative test of a sucrose solution with sucrose + para-ethoxy benzonitrile solution

The test samples ("Test")contained 7% sucrose and 20 ppm of para-ethoxy benzonitrile in water. The test samples were compared with control samples containing 7, 8, 9, and 10% sucrose in water. The sensory evaluations were conducted as follows. All samples were presented at ambient temperature in 15 ml aliquots at random to a panel of 15 subjects all of whom were sweet sensitive of varying sensitivity. Alter tasting each sample, the mouth was rinsed thoroughly with water at ambient temperature prior to tasting the next sample. The tastings were carried out in two replications in one session. Panelists were asked to rank the solutions whilst wearing nose plugs. They were asked to rank from least sweet to most sweet.

The data were subjected to an R-Index analysis. An R-index greater than the critical value, means that the test sample is significantly sweeter than the sucrose sample. An R-index from 50% to the critical value means the sweetness enhancer sample has an equivalent sweetness to the compared sucrose sample. An R-index below the lower critical value indicates that the sucrose sample is sweeter than the sweetness enhancer sample.

| Solutions compared | R-index [%] | Critical value [%] | Significantly different (p<0.05) |
|---|---|---|---|
| 7% sucrose vs. Test | 95% | 64.61 | Yes |
| 8% sucrose vs. Test | 73% | 64.61 | Yes |
| 9% sucrose vs. Test | 28% | 35.39 | Yes |
| 10% sucrose vs. Test | 10% | 35.39 | Yes |

The data in the table show that the Test sample was significantly sweeter than both 7 and 8% sucrose solutions. However, the Test was perceived as less sweet compared with 9% and 10% sucrose. By interpolation, the Test is perceived as iso-sweet to 8.5% sucrose.

Having regard to the data presented in Example 1, one would expect the Test sample in Example 2 to be iso-sweet to 7.75% sucrose were the effect of p-ethoxy benzonitrile to be merely additive. Accordingly, these examples demonstrate the synergistic effect of the p-ethoxy benzonitrile, i.e. it is a sweetness enhancer.

## Claims

1. The use of a para-alkoxy benzonitrile compound as a sweetness enhancer.

2. The use according to claim 1 wherein the para-alkoxy benzonitrile is selected from the group consisting of para-ethoxy benzonitrile, para-propoxy benzonitrile, 4-sec-butoxybenzonitrile, 4-isopropoxybenzonitrile.

3. A consumable product comprising at least one sweetener and a para-alkoxy benzonitrile compound.

4. A consumable product according to claim 3 wherein the para-alkoxy benzonitrile is selected from the group consisting of para-ethoxy benzonitrile, para-propoxy benzonitrile, 4-sec-butoxybenzonitrile, 4-isopropoxybenzonitrile.

5. A consumable product according to claim 3 or claim 4 wherein the para-alkoxy benzonitrile is employed in amounts of 0.1 to 20 ppm.

6. A consumable product according to any of the claims 3 to 5 wherein the sweetener is selected from the group consisting of sucrose, fructose, glucose, high fructose corn syrup (containing fructose and glucose), xylose, arabinose, and rhamnose, the sugar alcohols erythritol, xylitol, mannitol, sorbitol, and inositol, and the artificial sweeteners AceK, aspartame, neotame, sucralose, and saccharine.

7. A consumable product according to any of the claims 3 to 6 wherein the sweetener is used in amounts of 0.1 to 20 ppm.

8. A consumable product according to any of the claims 3 to 7 comprising an additional sweetness enhancer selected from the group consisting of mogroside V, swingle extract, rubusoside, rubus extract, stevioside, rebaudioside A, and neohesperidin dihydrochalcone

## Patentansprüche

1. Verwendung einer para-Alkoxybenzonitrilverbindung als Süßeverstärker.

2. Verwendung nach Anspruch 1, wobei das para-Alkoxybenzonitril aus der Gruppe bestehend aus para-Ethoxybenzonitril, para-Propoxybenzonitril, 4-sec-Butoxybenzonitril, 4-Isopropoxybenzonitril ausgewählt ist.

3. Verzehrprodukt, umfassend mindestens einen Süßstoff und eine para-Alkoxybenzonitrilverbindung.

4. Verzehrprodukt nach Anspruch 3, wobei das para-Alkoxybenzonitril aus der Gruppe bestehend aus para-Ethoxybenzonitril, para-Propoxybenzonitril, 4-sec-Butoxybenzonitril, 4-Isopropoxybenzonitril ausgewählt ist.

5. Verzehrprodukt nach Anspruch 3 oder Anspruch 4, wobei das para-Alkoxybenzonitril in Mengen von 0,1 bis 20 ppm eingesetzt wird.

6. Verzehrprodukt nach einem der Ansprüche 3 bis 5, wobei der Süßstoff aus der Gruppe bestehend aus Saccharose, Fructose, Glucose, fructosereichem Maissirup (enthält Fructose und Glucose), Xylose, Arabinose und Rhamnose, den Zuckeralkoholen Erythritol, Xylitol, Mannitol, Sorbitol und Inositol und den künstlichen Süßstoffen AceK, Aspartam, Neotam, Sucralose und Saccharin ausgewählt ist.

7. Verzehrprodukt nach einem der Ansprüche 3 bis 6, wobei der Süßstoff in Mengen von 0,1 bis 20 ppm verwendet wird.

8. Verzehrprodukt nach einem der Ansprüche 3 bis 7, umfassend einen zusätzlichen Süßeverstärker, der aus der Gruppe bestehend aus Mogrosid V, Swingle-Extrakt, Rubusosid, Rubus-Extrakt, Steviosid, Rebaudiosid A und Neohesperidindihydrochalcon ausgewählt ist.

## Revendications

1. Utilisation d'un composé de para-alcoxybenzonitrile comme exhausteur de sucrosité.

2. Utilisation selon la revendication 1, dans laquelle le para-alcoxybenzonitrile est choisi dans le groupe constitué par le para-éthoxybenzonitrile, le para-propoxybenzonitrile, le 4-sec-butoxybenzonitrile, le 4-isopropoxybenzonitrile.

3. Produit consommable, comprenant au moins un édulcorant et un composé de para-alcoxybenzonitrile.

4. Produit consommable selon la revendication 3, dans lequel le para-alcoxybenzonitrile est choisi dans le groupe constitué par le para-éthoxybenzonitrile, le para-propoxybenzonitrile, le 4-sec-butoxybenzonitrile, le 4-isopropoxybenzonitrile.

5. Produit consommable selon la revendication 3 ou la revendication 4, dans lequel le para-alcoxybenzonitrile est employé selon des quantités allant de 0,1 à 20 ppm.

6. Produit consommable selon l'une quelconque des revendications 3 à 5, dans lequel l'édulcorant est choisi dans le groupe constitué par le saccharose, le fructose, le glucose, le sirop de maïs à haute teneur en fructose (contenant du fructose et du glucose), le xylose, l'arabinose et le rhamnose, les alcools de sucre : l'érythritol, le xylitol, le mannitol, le sorbitol et l'inositol, et les édulcorants artificiels : l'AceK, l'aspartame, le néotame, le sucralose et la saccharine.

7. Produit consommable selon l'une quelconque des revendications 3 à 6, dans lequel l'édulcorant est utilisé selon des quantités allant de 0,1 à 20 ppm.

8. Produit consommable selon l'une quelconque des revendications 3 à 7, comprenant un exhausteur de sucrosité supplémentaire choisi dans le groupe constitué par le mogroside V, l'extrait de Luo Han Guo, le rubusoside, l'extrait de Rubus, le stévioside, le rébaudioside A, et la néohespéridine dihydrochalcone.
